Europäisches Patentamt

(19) European Patent Office

Office européen des brevets

(11) Publication number: **0 093 934**
A2

(12) **EUROPEAN PATENT APPLICATION**

(21) Application number: **83104017.5**

(22) Date of filing: **24.04.83**

(51) Int. Cl.³: **B 60 J 1/20**

(30) Priority: **10.05.82 IT 2117082**
**14.10.82 IT 2317882 U**

(43) Date of publication of application: **16.11.83**
**Bulletin 83/46**

(84) Designated Contracting States: **AT BE CH DE FR GB LI NL SE**

(71) Applicant: **Masi, Lamberto, Via Newton 9, I-20016 Pero Milano (IT)**

(72) Inventor: **Masi, Lamberto, Via Newton 9, I-20016 Pero Milano (IT)**

(74) Representative: **Petruzzelli, Antonio, Via E. De Amicis No. 25, I-20123 Milan (IT)**

(54) **A remote-control device for roller-blinds for motor vehicles.**

(57) In its automatic embodiment the device comprises a rotary drum (9) for winding up at least one cable or rope (5) connected to the blind; means (6, 7) for guiding said cable (5) along a path between the winding drum (9) and a stop member (6) for stopping the blind (2) in its pulled out condition, and means (16, 43, 47) for controlling the winding up of the cable (5) onto the drum (9). The control means comprise a cable-guiding member (16, 43) which moves parallel to the drum (9) and a slider operated by the rotation of the drum (9) which acts upon electric contact elements (26, 27) connected to the circuit of an electric motor (10), in order to stop the rotation of the drum (9) in the pulled-out and, respectively, rolled-up condition of the blind (2).

## A remote-control device for roller-blinds for motor vehicles

This invention refers to a remote-control device for roller blinds, in particular for roller-blinds or winding up curtains suitable for mounting in correspondence with the rear window of cars.

In previous patent GB-A- of the same applicant, there are known roller blinds for car windows; these blinds usually consist of a sheet of plastic material, or other suitable material, one edge of which is secured to a winding shaft housed in a casing and biased by a spring to rotate in the winding up direction of the flexible sheet of the blind. The blind is usually arranged along the lower edge of the window and is unwound by acting, with one hand, directly upon a tab fixed to the fore edge of the sheet and hooking it onto a retaining element fixed close to the opposite or upper edge of the window itself. It is obvious therefore that the operations of pulling out and rewinding blinds situated at a distance from the front seat, in particular, blinds at the rear window, cannot be carried out by the driver or the front-seat passenger whilst the vehicle is moving; in fact, it is necessary to enter the rear of the stationary vehicle in order to manually operate the blinds.

A scope of this invention is to provide a control device by means of which it is possible to remote control the pulling out and rewinding of one or more blinds simultaneously, whilst the vehicle is moving, and whilst remaining seated.

A further scope of this invention is to provide a control device, as described above, provided with automatic control means and means for adjusting the unwinding stroke of the blind in order to adapt said blind to windows of different shapes and heights.

A still further scope of this invention is to provide a manually-operated remote-control device for car blinds, of extremely simple construction, easily mounted and reliable.

According to the invention a control device has been provided for the remote control of roller-blinds for motor vehicles, of the type in which a flexible sheet of material is secured by one edge to a winding up shaft biased by a spring acting to rotate the shaft in the winding direction of the sheet itself, characterized by the fact of comprising a pulling out cable, cord or the like, connected to one edge of the sheet of the blind, means for guiding said cable along a path running between a stop element for the sheet, in its withdrawn condition, and manual or automatic remote control means, as well as means for holding the sheet in its withdrawn condition against the aforesaid stop element.

Some embodiments of the invention will be described in greater detail hereunder, by reference to the examples in the accompanying drawings, in which:

Fig. 1 shows an interior view of the rear window of a motor vehicle fitted with a remote control device for controlling two roller blinds placed side by side;

Fig. 2 shows a side view of the control geared motor and several parts of the device;

Fig. 3 shows a detail of the previous figure;

Fig. 4 shows an enlarged cross-sectional view along the line 4-4 of fig. 2;

Fig. 5 shows a cross-sectional view along the line 5-5 of fig. 4;

Fig. 6 shows a top view along the line 6-6 of fig. 2;

Figs. 7,8,9 and 10 show various side and cross-sectional views of a supporting element for guiding hoses in which slide the cords or cables for controlling and stopping the blind in its pulled-out condition;

Figs. 11 and 12 show a cross-sectional and side view of a fastening element to which the control cord or cable of the blind is attached;

Fig. 13 shows a modified embodiment of the device for guiding the cables around the winding roller;

Fig. 14 shows an enlarged cross-sectional view along the line 14-14 of fig. 13;

Fig. 15 shows an axial cross-sectional view of the winding up drum, with a protective element for safeguarding against the accidental unwinding of the control cables.

Fig. 16 schematically represents the interior of a motor vehicle incorporating a manual remote-control device according to a further embodiment of the invention;

Fig. 17 shows a cross-sectional view of the rear retaining element along the line 17-17 of fig. 19;

Fig. 18 shows the fore retaining element;

Fig. 19 shows a cross sectional view along the line 19-19 of fig. 17;

Fig. 20 shows a longitudinal sectional view along the line 20-20 of fig. 18;

Fig. 21 shows a view of a further embodiment of the manual remote control device.

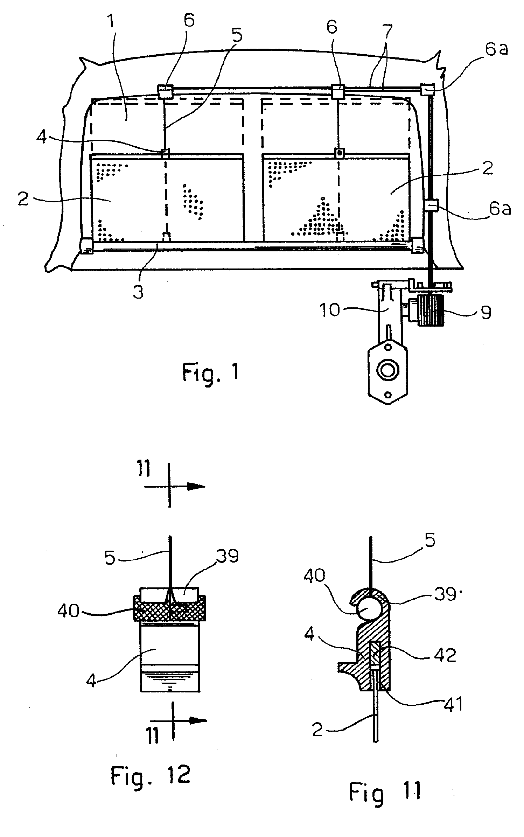

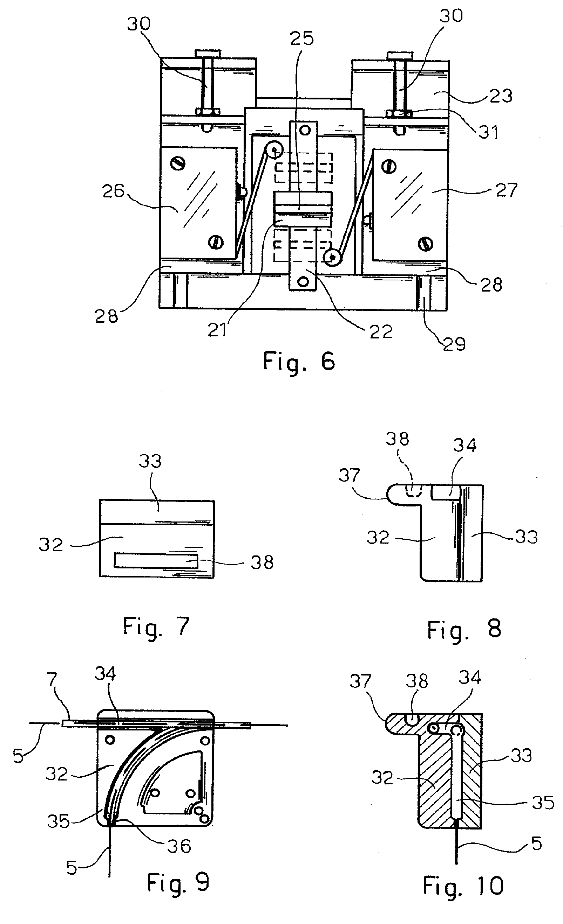

Fig. 1 shows a particular arrangement of the automatic device for remote-control of the two roller-blinds of the rear window 1 of a motor vehicle or the like. The blinds, in a per sè known manner, are placed side by side and comprise a sheet 2, of any suitable flexible material, for example, canvas, perforated plastic material or the like, which winds around a respective winding up shaft (not shown) placed in a casing 3 or housing, along the lower edge of the window 1. The winding up shaft of each sheet 2, in a per sè known manner, is subjected to a biasing spring which operates in order to rotate said shaft in the winding up direction of the sheet. Therefore, the sheet 2 of the blind is secured by one edge to the winding up shaft, whereas the opposite edge is connected, by means of a gripping and hooking element 4, to the end of a rope, cord, cable or the like 5, forming part of the control device for the remote control of the blind, from a completely wound up condition to a condition in which it is pulled out completely over the window 1. Reference 6 indicates a stop element which can engage with the hooking element 4 fixed to the fore edge of the sheet 2. The stop element 6 serves as a guide for the cable 5 and is shown, in one of its embodiments, in the views of figs. 7-10 to be described.

Each cable 5 is guided through a respective flexible tube or sheathing 7, arranged inside the vehicle, for example,

- 5 -

0093934

covered by the upholstery paneling, said tubes 7 being supported by means of supplementary elements 6A secured to the body of the vehicle.

The blind control cables 5 wind onto a rotary drum 9 driven by an electric geared motor 10 which can be remote controlled, from one or more positions, by means of a suitable switching device, not shown, which makes it possible to control the rotation of the geared motor, and thereby the drum 9, in one direction and, respectively, in the opposite direction, for simultaneously pulling out or winding up the two blinds 2. The geared motor 10 may be placed anywhere in the vehicle by providing cables 5 and guiding tubes 7 of an adequate length.

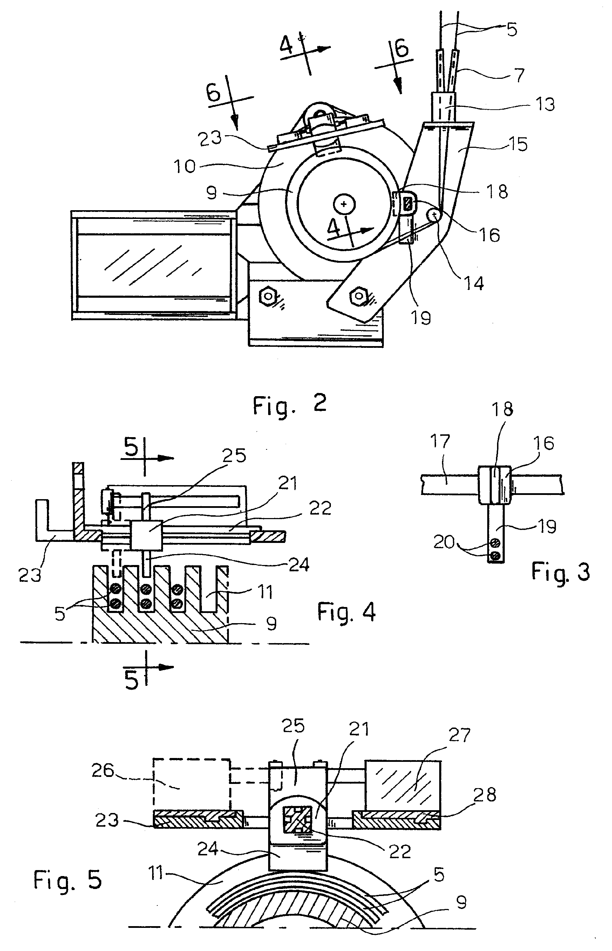

As shown in the figures from 2 to 6, apart from comprising the means for guiding each cable 5 along the path between each blind 2 and the winding drum 9, the device also comprises means for controlling the correct winding and unwinding of the cables 5 from the rotary drum 9, thereby ensuring proper functioning. In this connexion, as shown, the drum 9 comprises a helical groove 11 in which the coupled turns of the two connection cables 5 are wound (fig. 4); said helical groove 11 runs around the cylindrical surface of the drum 9 for a sufficient length to receive enough cable to pull the blinds completely out.

In particular, it can be seen from fig. 2 that the tubes 7 for guiding each single cable, enter a connecting element 13; the cables run through the connecting element 13 and are then laterally deviated by a pin 14 arranged parallel to the rotation axis of the drum 9 and secured to a bracket 15 or to the supporting frame of the geared motor 10. The cables 5 are then orientated in a direction substantially tangent to the helical groove on the drum 9, or towards the drum itself, and are guided and kept perfectly aligned in the aforesaid groove, by means of a sliding cable-guide 16 made to move along a rod 17 by means of the same rotating movement as the drum.

In the embodiment shown in figures 2 and 3, the cable-guiding element 16 comprises a shaped tongue 18 which partially penetrates right down into the helical groove 11 of the drum, so that the latter, in rotating, pulls the cable-guide 16 along the rod 17, along the entire axial length of the drum. The cable-guide 16 also presents a protrusion or part 19 provided with a common hole or separate holes 20 for guiding the cables 5 towards the drum 9. Consequently, during the rotation of the drum on one direction and in the opposite direction, the cable-guide 16 is made to move along the rod 17 and the cables 5 are guided and kept perfectly aligned with respect to the turns of the helical groove 11.

Figures 4,5 and 6 show in detail, a device or means for controlling the geared motor, for stopping the rotation of the drum in the pulled-out and, respectively, wound-up condition of the sheet 2. This device substantially comprises a slider 21 running along a guide 22 fixed in correspondence with an aperture made in a supporting plate 23 provided at one side of the geared motor 10. The slider 21 presents a tongue 24 which penetrates into the helical groove 11 of the drum 9 in such a way as to be pulled by the rotation of the drum itself, along the guide 22 parallelely to the axis of rotation of said drum. The slider 21 also comprises a second tongue or protrusion 25, opposite the first one, which actuates two electric contact elements 26,27 arranged upside down with respect to each other and to the sides of the aforementioned slider. The two electric contact elements 26,27 for example consisting of microswitches or limit switches, are connected to the electrical circuit of the geared motor 10 and act upon the latter in order to turn the power on or off and in order to stop its rotation by stopping the winding drum 9, when the sheets 2 are fully wound up, or when they are completely pulled out. It is obvious that the shape and arrangement of the slider or moving member 21, and of the microswitches 26,27 may also differ from those shown.

The device comprises moreover means for adjusting the position of the microswitches 26 and 27 with respect to the slider 21, such as to enable the adjustment of the stopping position of the drum and of the sheets according to the width or height of the rear window of the vehicle. In the example shown, these adjusting means comprise, for each electric contact element 26 and 27, a slide 28 moving along a slot 29 in the supporting plate 23; the electric contact element being suitably fixed to the slide. The slide 28 is pre-arranged in a suitable position, by acting, for example, upon an adjusting screw 30 which is then locked, for example, by means of a nut 31 screwed against the slide itself. The solution shown enables a continuous fine adjustment of the position of the microswitch, however it is obvious that other solutions suitable for the intended purpose may be used in place of the latter.

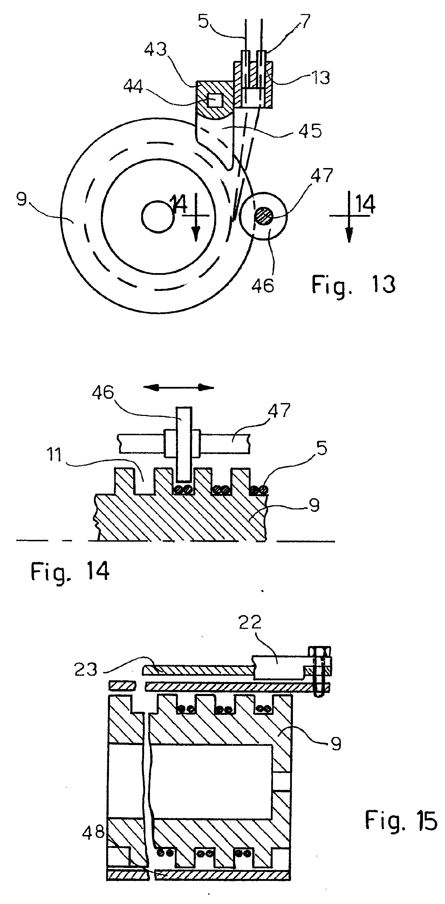

The figures from 7 to 10 show the details of elements for supporting the guiding tubes 7 of the control cables 5; in particular, the figures show an embodiment of a stop element 6, for keeping the blind pulled out. This element is made up of two parts 32 and 33 provided with internal passages for the tubes 7 and the cables 5. As the guiding tubes 7 may be orientated in different directions, depending upon their paths within the vehicle, this element 6 presents a rectilinear slot or channel 34 of sufficient width to allow the passage of two paired tubes 7, as in the case of the arrangement of the elements 6A in fig. 1, as well as a branched-off slot or channel 35, arranged at 90° with respect to the first one, to receive one end of the tubes 7 in the event of the arrangement indicated by reference 6 in fig. 1. The slot 35 is consequently directed towards the blind and ends in a narrower slit 36, through which the cable 5 runs. The two parts 32 and 33 of the described element may present matching pins and holes, as well as holes for the fastening screws. This element 6, in particular the one destined to constitute the stop for the sheet, may optionally present a protrusion 37 provided with a slot 38 for engaging with a hooking element 4 (figures 11 and 12) secured to the fore edge of the sheet 2 of the blind. The hook-shaped end 39 of this element, besides penetrating the slot 38 of the stop element 6 for keeping the sheet 2 pulled out should the device fail to function, also serves to removably hold back a clamp 40 to which is connected the end of the cable 5. This clamp may be of any shape, for example, it may be made in two halves, screwed one into the other, one of which presents a hole for the cable 5, which is thus held and gripped securely between the two halves of the clamp screwed together. The element 4 also presents, on the end opposite to the end 39, a crosswise slot 41 into which penetrates and is secured, for example, with a screw or the like, a transversal rod 42 for stiffening the extreme edge of the sheet. This rod 42 can either be individual for each sheet or in the form of one single rod for both sheets; in the latter case, the cables 5 may be attached near to the ends of said single rod 42.

Figures 13 and 14 show an alternative of the means for guiding and controlling the winding and unwinding of the cables 5 from the rotary drum 9. In fact, unlike the previous case, here the connecting element 13 is movable laterally to the drum 9, being held for example on a slider 43 running along a guide bar 44; the slider 43 presents a tongue 45 which penetrates into the helical groove of the drum 9 and is pulled along by the rotation of the drum itself, thus keeping the cables 5 constantly aligned with the helical groove 11. In this case, the two cables 5 are arranged side by side in the groove 11 of the drum, and are kept perfectly adherent to the bottom of the groove itself by means of a movable pushing member in the form of a disc 46 apt to rotate and to run along a guiding bar 47 arranged at the side of the drum. The disc 46 partially penetrates into the groove 11 for winding the cables 5 into the drum 9.

Lastly, fig. 15 shows the optional use of a protective element 48 which surrounds the drum 9, to prevent the accidental unwinding of the cables 5, when the geared motor stops, due for example, to the elastic behaviour of the cables under tension.

This protective element 48 is in the form of a tubular element which externally surrounds the drum 9 and which is secured, for example, by a screw, to the supporting plate 23 of the previously described means controlling the rotation of the geared motor. The tubular protective element 48, must obviously be provided with suitable apertures for the sliders or the movable elements pulled along by the rotation of the drum.

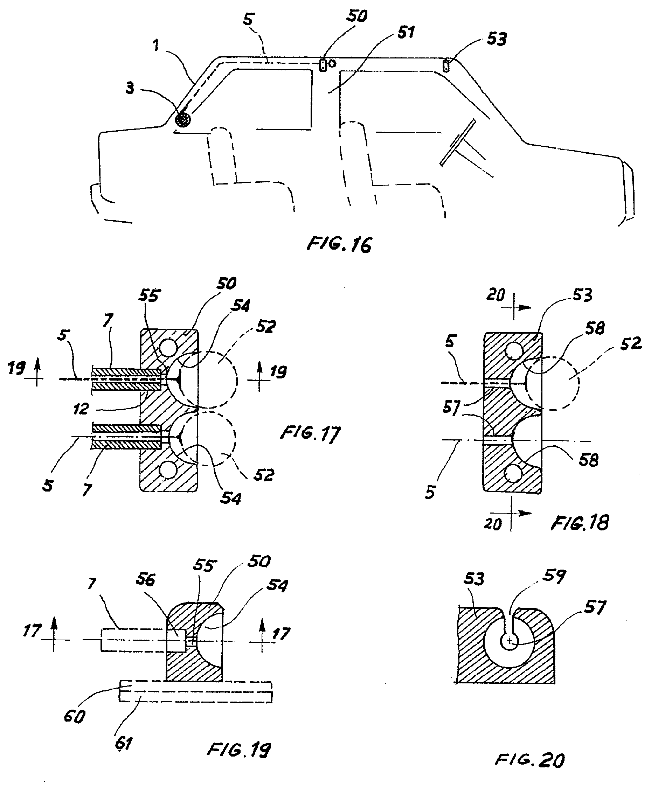

Figure 16 shows the interior of a generic motor vehicle provided with a remote-control device, in which the unwinding and winding up of the sheet 2 of the blind, or its withdrawing from a protective casing 3, are remote controlled by the actual driver of the vehicle by manually operating a control device described hereunder. This device always comprises a cable 5 or the like, for each blind 2, guided by a sheath 7, as in the previous cases, between the upper edge of the rear window 1 and a first retaining element 50 (figs. 16 and 17) secured to the pillar 51, or in any other suitable position of the body of the vehicle, close to the driver's seat.

The cable 5 is secured at one end, to the front edge of the sheet 2 of the blind, whilst the other end is secured to a manually operable hooking element 52 which, in the case in question, is in the form of a small ball which engages with a first retaining element 50 when the sheet 2 is in its fully wound-up condition. Reference 53 shows a second retaining element, for the remote-control cable 5, said element 53 being in turn secured to the structure of the vehicle in front of, and before, the element 50, by a distance equal to the length of the sheet 2 of the blind to be unwound in order to cover the full height of the window 1.

Figures 17 and 19 show two different cross-sectional views of the first or fixed retaining element 50 in correspondence with the pillar 51; as it can be seen this element 50 is composed of a substantially rectangular block, one side of which is provided with semi-spheric seats 54 for housing the mobile hooking element 52 fixed to the end of the cable 5. A hole 55 having a diameter corresponding to the inner diameter of the sheet 7 communicates from one side with the seat 54 and from the other, with a counter-hole 56 into which is inserted the end of the guiding sheath 7, as shown; the ends of the fixed elements 50 and 53 present holes for fastening screws.

Figures 18 and 20 show a side view and a cross-sectional view of the second or fixed retaining element 53 with which the mobile hooking element 52 engages in order to keep the sheet 2 in its pulled-out condition. This retaining element 53 is substantially of the same shape as the retaining element 50, except for the fact that here there is no counter-hole 56 for the sheath 7 and for the fact that the through hole 57 communicates, on one side, with the seat 58 for the mobile retaining element and, on the other side, opens directly out onto the wall of the element 53 through a slit 59 to enable slide, introduction and extraction of the cable 5. This slit 59 preferably presents chamfered edges in order to facilitate the introduction of the cable 5.

The remote-control device operates substantially as follows: assuming that the sheets 2 are in their fully wound up condition, with the mobile hooking elements 52 of both blinds engaged with the rear one 50 of the fixed retaining elements (fig. 17). Whenever he wishes to pull out or unwind one or both sheets of the blinds 2, all the driver needs to do is to take hold of the relative mobile hooking element 52 which is in an easily accessible position, and then pull it forward as far as the second fixed retaining element 53 (fig. 18) unwinding the blind 2 by the pre-established length; he then passes the cable 5 through the slit 59, releasing the mobile hooking element 52, which will be drawn back by the biasing spring of the blind, to engage in its seat 58. When he wishes to lower or rewind the blind again, he simply carries out the above operations in reverse.

The previous figures 11 and 12 show the use of a device for attaching the end of the cable 5 to the flexible sheet 2 of the blind, which enables the adjustment of the length of the cable 5 itself; in fact, when securing the retaining elements 50 and 53, it is necessary to position them accurately in order to prevent the cable 5 from being slack or of an insufficient length to reach the front retaining element 53. However, for practical reasons, it is necessary for the manufacturer to supply a remote-control device with sheath 7 and cable 5 of a standardized length that the user will then shorten or cut to the required length according to the type of vehicle in which such device is to be mounted. It has therefore been considered useful to provide means for enabling the adjustment of the length of the cable 5. This can be achieved, as mentioned previously, by securing the end of the cable 5 to the clamp 40, as shown in figures 11 and 12, which is inserted by pressure, or removably, into the hook-shaped portion of the element 4; the clamp 40, consisting of two parts which can be screwed one into the other, makes it possible to block the cable 5 at the desired length, passing through a hole in the clamp 40.

A second possibility of adjustment is shown in fig. 19 where the fixed retaining element 50 or 53 is mounted sliding, and lockable, by means of a screw (not shown), along a groove or guide 60 provided in an anchoring plate 61 which is fastened to the structure of the vehicle, thereby constituting an intermediate anchoring element which can be used in particular circumstances.

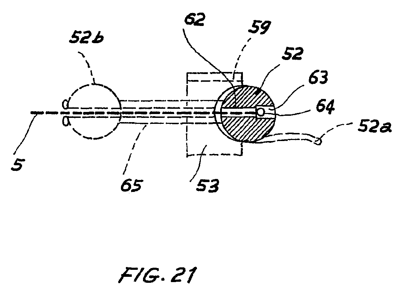

Lastly, figure 21 shows a further means of adjusting the length of the cable 5, in correspondence with the mobile hooking element 52; it can be seen, in fact, from this figure that the element 52 is provided with a hole 62, for introduction of the end of the cable 5, finishing in a counter-hole 63 of greater diameter. The cable 5 is secured to the element 52, after having been introduced into the hole 62, by tying a knot 64, or by any other equivalent means, which remains inside the counter-hole 63; it is obvious that by partially pulling the cable 5 forward and varying the position of the knot or stop 64, it is possible to further adjust the length of the aforesaid cable. Figure 21 also shows the possibility of shaping the element 52 differently, for example, by providing a tongue 52a, thereby making it easier to grip.

Figure 21 also shows a further feature of the mobile hooking element 52; in fact, from said figure, as shown by the dotted line, it can be seen that the mobile hooking element 52 may be provided with a further spherical body 52b joined to the first one by an intermediate cylindrical stem 65; the length of the cylindrical stem 65 being slightly more than the width of the element 53, for example, one and a half times the width of the latter, thus enabling an easy disengagement. In fact, to disengage the parts, it is sufficient to push the rear spherical body 52b slightly forward towards the slit 59, which presents a greater width with respect to the previous case, in order to automatically free it from the retaining element 53; by releasing the hooking element 52, 52b, the blind will be automatically wound up.

Claims

1. A remote-control device for roller-blinds for motor vehicles and the like, in which a sheet (2) of flexible material is secured by one edge to a winding-up shaft biased by a return spring for rotating the shaft in the winding-up direction of the sheet (2), characterized by the fact that it comprises a rotary drum (9) connected to a remote-controlled electric geared motor (10) for winding up at least one cable (5) connected to the fore edge of the sheet (2); means (6a,7) for guiding said cable (5) along a path running between the winding-up drum (9) and a stop element (6) for holding the sheet (2) of the roller-blind in its pulled out condition, means (16,43,46) for controlling the winding and unwinding of the cable (5) from the drum (9) as well as means (21,26,27) for stopping the drum-controlling geared motor (10) in the pulled-out and, respectively, rolled-up condition of the sheet(2), said stopping means comprising a member (21) which moves in correlation to the rotation of the drum (9), said mobile member (21) acting upon electric contact elements (26,27) connected to the electrical circuit of the geared motor (10).

2. Device as claimed in claim 1, characterized by the fact that the means (21, 26, 27) for stopping the geared motor (10) controlling the drum, in the pulled-out and, respectively, rolled up positions of the blind, comprise a first (26) and a second (27) electric contact element, adjustable in position with respect to the extreme positions of the sheet (2) and a mobile element (21) for actuating the contact elements (26,27) which slides parallel to the drum (9) correlatedly to the rotation of the drum itself, from an extreme position in which it controls one of the electric contact elements (26) to an extreme position in which it controls the other one of the aforesaid contact elements (27).

3. Device as claimed in claim 1, characterized by the fact that the means for controlling the winding and unwinding of the cable (5) from the drum comprise a mobile member (16, 43) for guiding the cable (5), sliding parallel to the drum and correlatedly to the rotation of the drum (9) itself.

4. Device as claimed in claim 1, characterized by the fact that said winding drum (9) presents a helical groove (11) for winding the cable (5).

5. Device as claimed in claim 2 or 3, characterized by the fact that said sliding element (16) or member (43) consists of a slider running along a guide (17,44) parallel to the axis of the drum (9) and presents a protruding part (18,55) which partially penetrates into the helical groove (11) in the drum (9).

6. Device as claimed in claim 3 or 5, characterized by the fact that said sliding member (16) is provided with channels for the cable (5) facing the drum (9) and aligned with the helical groove (11) for winding the cable (5).

7. Device as claimed in claim 3, characterized by the fact that said means (16,43) for guiding the cable (5) comprise a pin (14) for deviating the cable (5) placed to the side of the sliding guide member (16) and parallel to the axis of rotation of the drum (9).

8. Device as claimed in claim 2, characterized by the fact that each electric contact member (26,27) is mounted on a slider (28) moving on a supporting plate (23) for the sliding element (21) actuating the contact elements (26,27), and by the fact that means (30,31) are provided for adjusting and locking the slider (23) in the desired position.

9. Device as claimed in claim 1 and claim 5, characterized by the fact that said means (43) for controlling the winding and unwinding of the cable (5) from the drum (9) comprise a connecting element (13) for cable-sliding tube (7) which is movable parallel to the side of the drum (9), and an element (46) for inserting the cable (5) into the helical groove (11) of the drum (9) in the form of a disc-like element rotary supported and sliding on a guide (47) to the side of the drum (9), said disc (46) penetrating partially into the groove (11) of the drum (9).

10. Device as claimed in claim 1, characterized by the fact that a protective element (48) surrounds the drum (9), said protective element (48) presenting apertures for the passage of the cable (5) and sliding elements (16,44,21) of the aforesaid controlling and stopping means.

11. Device as claimed in claim 1, characterized by the fact that said cable-guiding means comprise a flexible tube for the cable (5), between a tube-connecting element (13) close to the winding-up drum (9) and the stop element (6) of the sheet, said stop element (6) presenting a linear channel (34) for at least one tube (7) and a second branched-off channel (35) placed at right angles to the first one, for deviating the guiding tube (7) of the cable (5) orientated towards the roller-blind.

12. Device as claimed in claim 11, characterized by the fact that said stop element (6) presents a lateral protrusion (37) which engages with a manual hooking element (4) of the blind (2).

13. Device as claimed in claim 1, in particular for controlling two blinds placed side by side in a single housing, characterized by the fact that a common rod (42) is provided for stiffening the fore edges of the sheets (2), and in which said cables are connected near to the ends of said rod (42).

14. Remote-control device for roller-blinds of motor-vehicles and the like, the blind comprising a flexible sheet of material (2) rolled on a shaft biased by a return spring to rotate in the winding-up direction of the sheet (2), characterized by the fact that it comprises a control cable (5) one end of which is secured to the sheet (2) of the blind, said cable (5) sliding through a guide sheath (7) extending from a stop element of the upper edge of the rear window of the vehicle to a first fixed retaining element (50) close to the driver's seat, and manually-operated mobile hooking means (52) at the other end of the cable (5) which can removably engage with said first retaining element (50) and, respectively, with a second fixed retaining element (53) placed, from the first one, at a distance equal to the length of the sheet(2) to be unrolled.

15. Device as claimed in claim 14, characterized by the fact that it comprises further means (40,60,64) for adjusting the length of the remote-control cable (5).

16. Device as claimed in claim 15, characterized by the fact that said adjusting means comprise a screw clamp (40) for clamping the end of the cable (5) in correspondence with an element (4) for manually hooking the blind (2).

17. Device as claimed in claim 15, characterized by the fact that said adjusting means comprising a screw clamp (40) which is removably inserted into a hook-shaped portion (39) of an element (4) for connection to the fore edge of the sheet (2).

18. Device as claimed in claim 15, characterized by the fact that said adjusting means comprise a through hole (62, 63) in the mobile hooking element (52) into which the other end of the cable (5) is inserted and then secured by tying a knot or by providing a stop element (64).

19. Device as claimed in claim 14, characterized by the fact that said mobile hooking element (52) is provided with a tongue (52a) or elongated portion for grasping with one hand.

20. Device as claimed in claim 14, characterized by the fact that said mobile hooking element (52) is spherical in shape and by the fact that the fixed retaining elements (50,53) comprise partially spherical seats (54,58) each of which communicating with a hole (55,57) for passage of the cable (5), of which the hole (57) in the front retaining element (53) opens out on a lateral slit (59).

21. Device as claimed in claim 15, characterized by the fact that it comprises an intermediate anchoring plate (20) for the fixed retaining element (50,53) provided with means (60) for adjusting the positions of the aforesaid retaining element (50,53).

22. Device as claimed in claim 14, characterized by the fact that the mobile hooking means comprise a rigid element secured to the end of the cable, having a first spherical body (52) and a second rear spherical body (52b) joined by an intermediate stem (65) greater in length than the width of the second fixed retaining element (53).

116

Fig. 1

Fig. 12

Fig 11

Fig. 2

Fig. 4

Fig. 3

Fig. 5

Fig. 6

Fig. 7

Fig. 8

Fig. 9

Fig. 10

0093934

Fig. 13

Fig. 14

Fig. 15

FIG.16

FIG.17

FIG.18

FIG.19

FIG.20

FIG. 21